# EUROPEAN PATENT SPECIFICATION

(11) **EP 1 144 486 B1**
(45) Date of publication and mention of the grant of the patent: **03.11.2004**
(21) Application number: 99966694.4
(22) Date of filing: 28.12.1999
(51) Int. Cl.: C08J 7/00

(54) **ABRASION RESISTANT COATING COMPOSITION AND COATED ARTICLES**
ZUSAMMENSETZUNG FÜR ABRIEBFESTE BESCHICHTUNG UND DAMIT BESCHICHTETE GEGENSTÄNDE
COMPOSITION D'ENDUCTION RESISTANT A L'ABRASION ET ARTICLES ENDUITS

(30) Priority: 29.12.1998 US 114095 P; 30.11.1999 US 451169
(43) Date of publication of application: 17.10.2001
(73) Proprietor: PPG Industries Ohio, Inc., Cleveland, OH 44111 (US)
(72) Inventor: COLTON, James, P., Trafford, PA 15085 (US)
(74) Representative: Sternagel, Fleischer, Godemeyer & Partner Patentanwälte
(86) International application number: PCT/US1999/031078
(87) International publication number: WO 2000/039203

(56) References cited:
- EP-A- 0 379 343
- EP-A- 0 776 925
- DE-A- 19 737 328
- DE-A- 19 737 475
- US-A- 5 134 191
- PATENT ABSTRACTS OF JAPAN vol. 1998, no. 01, 30 January 1998 (1998-01-30) & JP 09 227830 A (SEIKO EPSON CORP), 2 September 1997 (1997-09-02) & DATABASE WPI Derwent Publications Ltd., London, GB; AN 1997-486603 & JP 09 227830 A (SEIKO EPSON CRP.)
- PATENT ABSTRACTS OF JAPAN vol. 016, no. 234 (C-0945), 29 May 1992 (1992-05-29) & JP 04 046975 A (SHIN ETSU CHEM CO LTD), 17 February 1992 (1992-02-17) cited in the application

## Description

The present invention relates to coating compositions used to form durable, i.e., abrasion and chemically resistant, coatings. Particularly, the present invention relates to sol-gel, i.e., solution-gelation, coatings on substrates such as organic polymeric material. More particularly, this invention relates to articles such as optical elements, e.g., ophthalmic lenses, transparent sheets, and films, having on at least one surface thereof, a durable optically transparent coating of the present invention.

Polymeric organic material(s) that are typically used to make optical elements, transparent sheets and films, have surfaces that are susceptible to abrasion and chemical attack. Often, such materials are coated with a protective coating to improve their abrasion resistance.

Protective coatings that incorporate epoxy-containing silane monomers, aluminum compounds and other silane monomers have been described in U.S. Patents 4,702,773, 4,731,264, and 5,462,806 and Japanese Patent Application 2,725,441. U.S. Patent 4,702,773 discloses a coating composition containing an effective abrasion resisting amount of a colloidal dispersion of a water insoluble dispersant such as aluminum oxide in a water-alcohol solution of selected organotrialkoxysilanes. U.S. Patent 4,731,264 discloses an organoalkoxysilane/alumina sol-gel composition and a method for its production. In the '264 patent, the patentees describe hydrolyzing an aluminum alkoxide in water to form a sol to which is added a hydrolyzable organotrialkoxysilane. U.S. Patent 5,462,806 discloses a plastic lens having on at least one surface a primer layer, a hardcoat layer and optionally, a reflection preventing layer. The primer and hardcoat layers, which are prepared from at least one organosilicon compound, may also contain fine particles of inorganic oxides. JP 2,725,441 describes a hard coating agent consisting of an epoxy group-containing difunctional alkoxysilane, a tetrafunctional silane, colloidal titania or alumina and a curing catalyst.

US-A-5,134,191 discloses a hard coating composition comprising an epoxy group-containing organic silicon compound and inorganic submicron particles such as silica sol which is curable with a minimal amount of an antimony compound as curing catalyst.

It has now been unexpectedly discovered that by using a catalytic amount of an acidic alumina sol in a coating composition comprising (i) glycidoxy[(C₁-C₃)alkyl]tri(C₁-C₄)alkoxysilane and (ii) tetra(C₁-C₆)alkoxysilane, the weight ratio of (i) to (ii) ranging from 0.5:1 to 100:1 and other adjuvant components, as described hereinafter, a coating may be prepared without the use of added curing catalyst. The coating of the present invention is also more durable, i.e., abrasion resistant, than an identical coating that incorporates an alkyl trialkoxysilane in place of the tetraalkoxysilane of the present invention. The composition of the present invention may be used to produce a durable, single-layer, sol-gel, adherent cured coating on solid polymeric organic materials using conventional coating technology.

### Detailed Description

The coating composition of the present invention comprising
(a) from 5 to 75 weight percent, based on the total weight of the coating composition, of silane monomer(s):
   (i) glycidoxy[(C₁-C₃)alkyl]tri(C₁-C₄)alkoxysilane; and
   (ii) tetra (C₁-C₆)alkoxysilane, the weight ratio of (i) to (ii) being at least 0.5:1 to 100:1; and
(b) a catalytic amount of an aqueous acidic alumina sol, said sol having particulate alumina having an average particle size of not more than 200 nanometers;
(c) a solvating amount of organic solvent;
(d) a leveling amount of nonionic surfactant; and
(e) water in an amount sufficient to form hydrolysates of said silane monomers, provided no curing catalyst is added.
The sum of all the components in the coating composition equals 100 percent.

Other than in the operating examples, or where otherwise indicated, all numbers expressing quantities of ingredients or reaction conditions used herein are to be understood as modified in all instances by the term "about". In each instance where the term "weight percent" is used herein with respect to a coating. composition, it is to be understood that the described weight percent is based on the total weight of the coating composition unless indicated otherwise.

The silane monomer(s) and hydrolysates thereof may be present in the coating composition in amounts of at least 5 weight percent, preferably, at least 10 weight percent, more preferably, at least 20 weight percent, and most preferably, at least 25 weight percent. The coating composition usually contains silane monomer(s) in an amount of not more than 75 weight percent, preferably, not more than 70 weight percent, more preferably, not more than 65 weight percent, and most preferably, not more than 60 weight percent. The amount of silane monomer(s) in the coating composition may range between any combination of these values, inclusive of the recited range.

Glycidoxy [(C₁-C₃) alkyl] tri (C₁-C₄) alkoxysilane monomers that may be used in the coating composition of the present invention include glycidoxymethyltriethoxysilane, alpha-glycidoxyethyltrimethoxysilane, alpha-glycidoxyethyltriethoxysilane, beta-glycidoxyethyltrimethoxysilane, beta-glycidoxyethyltriethoxysilane, alpha-glycidoxypropyltrimethoxysilane, alpha-glycidoxypropyltriethoxysilane, beta-glycidoxypropyltrimethoxysilane, beta-glycidoxypropyltriethoxysilane, gamma-glycidoxypropyltrimethoxysilane, hydrolysates thereof, or mixtures of such silane monomers. Preferably, the glycidoxy silane component is glycidoxy[(C₁-C₃)alkyl]tri(C₁-C₂)alkoxysilane, and most preferably is γ-glycidoxypropyltrimethoxysilane. Suitable tetra(C₁-C₆)alkoxysilanes that may be used in combination with the glycidoxy[(C₁-C₃)alkyl]tri(C₁-C₄)alkoxysilane in the coating composition of the present invention include materials such as tetramethoxysilane, tetraethoxysilane, tetrapropoxysilane, tetrabutoxysilane, tetrapentyloxysilane, tetrahexyloxysilane and mixtures thereof. Preferably, a tetra(C₁-C₄)alkoxysilane is used and most preferably, tetramethoxysilane is used.

In the combination of glycidoxy[(C₁-C₃)alkyl]tri(C₁-C₄)alkoxysilane and tetra(C₁-C₆)alkoxysilane monomers used in the coating composition of the present invention, the monomers may be present in a weight ratio of glycidoxy[(C₁-C₃)alkyl]tri(C₁-C₄)alkoxysilane to tetra(C₁-C₆)alkoxysilane of from at least 0.5:1 to 100:1, preferably at least 0.75:1 to 50:1 and more preferably from at least 1:1 to 5:1. The weight ratio of the silane monomers in the coating composition may range between any combination of these values, inclusive of the recited range.

The amount of acidic alumina sol in the coating composition of the present invention is a catalytic amount i.e., an amount necessary to catalyze or enhance the curing of the coating composition. The alumina sol is characterized by having an acidic pH, i.e., a pH less than 7.0, preferably less than 6.0 and more preferably, less than 5.0. The sol comprises alumina particles, i.e., spherical and/or non-spherical particles of alumina, which may be alumina and/or particles coated with alumina, e.g., alumina coated silica, that have a positive surface charge and an average particle size, i.e., diameter, of not more than 200 nanometers. As used in the present specification and claims, the term "alumina sol" means a colloidal dispersion of finely divided solid inorganic alumina particles in an aqueous-containing liquid, e.g., water. Such alumina sols may be prepared by hydrolyzing a metal salt precursor, e.g., an aluminum halide such as aluminum chloride, for a time sufficient to form the desired particle size. A process for preparing alumina sols and alumina coated silica sols is disclosed in U.S. Patent 3,864,142. Alternatively, preformed alumina particles may be used with other components that when combined produce the aforedescribed alumina sol.

When the alumina sol is prepared from a metal salt precursor such as aluminum chloride, the alumina sol is characterized by having a titratable chloride level in addition to an acidic pH. By the term "titratable chloride level" is meant a level of chloride determined by potentiometric titration with silver nitrate solution using a glass and silver-silver chloride electrode system. Such a method is described in CHLORIDE (4500-Cl) Potentiometric Method, Standard Methods for the Examination of Water and Wastewater, 18th Edition, 1992, pages 4-51 to 4-52. Typically, the titratable chloride level is an amount at or above the concentration detectable using the aforementioned method, i.e., greater than or equal to 0.01 weight percent, based on the total weight of the alumina sol. The titratable chloride may be at least 0.1 weight percent chloride, preferably at least 1.0 weight percent, more preferably at least 1.5 percent and most preferably at least 3.0 weight percent, chloride, e.g., 3.6 weight percent. The maximum level of chloride in the alumina sol is an amount that does not cause instability of the components, e.g., formation of a precipitate or gel, or prevent the formation of a cosmetically acceptable cured coating when used in the coating composition. The amount of chloride present in the alumina sol may range between any combination of these values, inclusive of the recited range.

The amount of acidic alumina in the coating composition may be at least 0.25 weight percent, preferably at least 0.5 weight percent, more preferably at least 1.0 weight percent and most preferably at least 2.0 weight percent based on the total weight of the silane monomer(s). Typically, the amount of alumina (aluminum oxide) in the coating composition is not more than 10 weight percent, preferably not more than 9 weight percent, more preferably not more than 8 weight percent, and most preferably not more than 7 weight percent. The amount of alumina in the coating composition may range between any combination of these values, inclusive of the recited range.

Examples of commercially available alumina sols that may be used in the composition of the present invention include NALCO® colloidal sols (available from NALCO Chemical Co.), REMASOL® colloidal sols (available from Remet Corp.) and LUDOX® colloidal sols (available from E. I. du Pont de Nemours Co., Inc.). These products may be characterized by their appearance, average particle size, percent alumina, pH, specific gravity, cohductivity, viscosity, percent chloride and surface charge. Specific examples of suitable alumina sols that may be used in the coating composition of the present invention are NALCO® 1056 alumina-coated silica sol and NALCO® 8676 colloidal alumina.

The amount of alumina in the alumina sol may vary considerably, e.g., from 3 to 30 weight percent, depending on how the sol was formed. The average particle size of the alumina in the alumina sol is a size that does not adversely effect commercially acceptable "cosmetic" standards for optical coatings applied to optical elements. Examples of cosmetic defects of coated lenses to be avoided include pits, spots, inclusions, cracks and crazing of the coating. The average particle size of the alumina may be at least 1 nanometer (nm), preferably at least 2 nm, and more preferably at least 3 nm. Typically, the average particle size is not more than 200 nm, preferably not more than 100 nm, more preferably, not more than 50 nm, and most preferably not more than 30 nm, e.g., 20 nm. The average particle size of the alumina in the coating composition may range between any combination of these values, inclusive of the recited range.

Organic solvents present in the coating composition of the present invention may be added or formed in situ by the hydrolysis of the silane monomer(s). Suitable organic solvents are those that will dissolve or disperse the solid components of the coating composition. The minimum amount of solvent present in the coating composition is a solvating amount, i.e., an amount which is sufficient to solubilize or disperse the solid components in the coating composition. For example, the amount of solvent present may range from 20 to 90 weight percent based on the total weight of the coating composition and depends, in part, on the amount of silane monomer present in the coating composition. Suitable solvents include, the following: benzene, toluene, methyl ethyl ketone, methyl isobutyl ketone, acetone, ethanol, tetrahydrofurfuryl alcohol, propyl alcohol, propylene carbonate, N-methylpyrrolidinone, N-vinylpyrrolidinone, N-acetylpyrrolidinone, N-hydroxymethylpyrrolidinone, N-butylpyrrolidinone, N-ethylpyrrolidinone, N-(N-octyl)-pyrrolidinone, N-(n-dodecyl)pyrrolidinone, 2-methoxyethyl ether, xylene, cyclohexane, 3-methylcyclohexanone, ethyl acetate, butyl acetate, tetrahydrofuran, methanol, amyl propionate, methyl propionate, diethylene glycol monobutyl ether, dimethyl sulfoxide, dimethyl formamide, ethylene glycol, mono- and dialkyl ethers of ethylene glycol and their derivatives, which are sold as CELLOSOLVE industrial solvents by Union Carbide, propylene glycol methyl ether and propylene glycol methyl ether acetate, which are sold as DOWANOL® PM and PMA solvents, respectively, by Dow Chemical and mixtures of such recited solvents.

A leveling amount of nonionic surfactant(s) is present as a component in the coating composition. A leveling amount is that amount which is sufficient to allow the coating to spread evenly or to level the coating composition on the surface of the material, e.g., polymeric organic material, to which it is applied, and provide uniform contact of the coating-composition to the surface of the substrate. Preferably, the nonionic surfactant is a liquid at the conditions of use and is used in amounts from about 0.05 to about 1.0 weight percent based on the amount of the silane monomer(s). Suitable nonionic surfactants are described in the Kirk Othmer Encyclopedia of Chemical Technology, 3rd Edition, Volume 22, pages 360 to 377. Other potential nonionic surfactants include the surfactants described in U.S. Patent 5,580,819, column 7, line 32 to column 8, line 46.

Examples of nonionic surfactants that may be used in the coating composition of the present invention include ethoxylated alkyl phenols, such as the IGEPAL® DM surfactants or octyl-phenoxypolyethoxyethanol sold as TRITON® X-100, an acetylenic diol such as 2,4,7,9-tetramethyl-5-decyne-4,7-diol sold as SURFYNOL® 104, ethoxylated acetylenic diols, such as the SURFYNOL® 400 surfactant series, fluoro-surfactants, such as the FLUORAD® fluorochemical surfactant series, and capped nonionics such as the benzyl capped octyl phenol ethoxylates sold as TRITON® CF87, the propylene oxide capped alkyl ethoxylates, which are available as the PLURAFAC® RA series of surfactants, octylphenoxyhexadecylethoxy benzyl ether, polyether modified dimethylpolysiloxane copolymer in solvent sold as BYK®-306 additive by Byk Chemie and mixtures of such recited surfactants.

Water is also present in the coating composition in an amount sufficient to form hydrolysates of the silane monomer(s). The amount of water necessary may be supplied by the water present in the alumina sol. If not, additional water may be added to the coating composition of the present invention to provide the required additional amount necessary to hydrolyze the silane monomer(s).

The coating composition of the present invention may be prepared by adding all of the silane monomers to a suitable vessel containing the alumina sol and mixing or vice versa. Typically, an exothermic reaction results from the hydrolysis of the silane monomers. The resulting reaction mixture is stirred for an additional hour while cooling to ambient temperature. Solvent (if required) and surfactant can then be added and the resulting mixture is stirred until all components are dissolved or homogeneously dispersed, e.g., for at least 30 minutes. The resulting coating composition is filtered, e.g., through a nominal 0.45 micron capsule filter, and stored at 4°C until use.

Prior to applying the coating composition of the present invention, it is typical to treat the surface of the substrate to be coated for the purposes of cleaning the surface and promoting adhesion. Effective treatment techniques for plastics, such as those prepared from CR-39® diethylene glycol bis(allyl carbonate) monomer or thermoplastic polycarbonate, e.g., a resin derived from bisphenol A and phosgene, include ultrasonic cleaning; washing with an aqueous mixture of organic solvent, e.g., a 50:50 mixture of isopropanol: water or ethanol: water; UV treatment; activated gas treatment, e.g., treatment with low temperature plasma or corona discharge, and chemical treatment such as hydroxylation, i.e., etching of the surface with an aqueous solution of alkali, e.g., sodium hydroxide or potassium hydroxide, that may also contain a fluorosurfactant. See U.S. Patent 3,971,872, column 3, lines 13 to 25; U.S. Patent 4,904,525, column 6, lines 10 to 48; and U.S. Patent 5,104,692, column 13, lines 10 to 59, which describe surface treatments of polymeric organic materials.

The coating composition may be applied to the substrate surface using a coating process such as that described in U.S. Patent 3,971,872. Any suitable conventional coating method may be used. Conventional coating methods include flow coating, dip coating, spin coating, roll coating, curtain coating and spray coating. To achieve optimum results in a dip coating process, a uniform, vibration-free withdrawal of the substrate to be coated is necessary. Vibration of the substrate at the air/liquid interface during withdrawal will prevent application of a uniform coating. It is also recommended that continuous filtration of the coating composition through a nominal 0.45 micron filter with recirculation through a dam be done to minimize incorporating particulate matter into the coating. Application of the coating composition to the substrate surface may done in an environment that is substantially free of dust or contaminants, e.g., a clean room. Coatings prepared by the process of the present invention may range in thickness from 0.1 to 50 microns (µm), preferably from 2 to 20 µm, and more preferably from 2 to 10 µm, e.g., 5 µm. The thickness of the coating may range between any combination of these values, .inclusive of the recited range.

Following application of the coating composition to the substrate surface, the coating is cured. For handling purposes, the coated substrate may be dried first and then cured. The coating may be dried at ambient temperatures or temperatures above ambient but below curing temperatures, e.g., up to 80°C. Afterwards, the dried, coated surface is heated to a temperature of between 80°C and 130°C, e.g., 120°C, for a period of from 30 minutes to 16 hours in order to cure the coating. While a range of temperatures has been provided for drying and curing the coating, it will be recognized by persons skilled in the art that temperatures other than those disclosed herein may be used. Additional methods-for curing the coating include irradiating it with infrared, ultraviolet, or electron radiation.

The substrate, e.g., polymeric organic material, may be in the form of optical elements such as windows, plano and vision correcting ophthalmic lenses, exterior viewing surfaces of liquid crystal displays, cathode ray tubes e.g., video display tubes for televisions and computers, clear polymeric films, automotive transparencies, e.g., windshields, aircraft transparencies, plastic sheeting, etc. Application of the coatings of the present invention to a polymeric film in the form of an "applique" may be accomplished using the methods described in column 17, line 28 to column 18, line 57 of U.S. Patent 5,198,267.

Examples of polymeric organic materials which may be used as substrates for the coating composition of the present invention include: polymers, i.e., homopolymers and copolymers, of the bis(allyl carbonate) monomers, diethylene glycol dimethacrylate monomers, diisopropenyl benzene monomers, ethoxylated bisphenol A dimethacrylate monomers, ethylene glycol bismethacrylate monomers, poly(ethylene glycol) bismethacrylate monomers, ethoxylated phenol bismethacrylate monomers, alkoxylated polyhydric alcohol acrylate monomers, such as ethoxylated trimethylol propane triacrylate monomers, urethane acrylate monomers, such as those described in U.S. Patent 5,373,033, and vinylbenzene monomers, such as those described in U.S. Patent 5,475,074 and styrene; polymers, i.e., homopolymers and copolymers, of polyfunctional, e.g., mono-; di- or multi-functional, acrylate and/or methacrylate monomers, poly(C₁-C₁₂ alkyl methacrylates), such as poly(methyl methacrylate), poly(oxyalkylene)dimethacrylate, poly(alkoxylated phenol methacrylates), cellulose acetate, cellulose triacetate, cellulose acetate propionate, cellulose acetate butyrate, poly(vinyl acetate), poly(vinyl alcohol), poly(vinyl chloride), poly(vinylidene chloride), polyurethanes, polythiourethanes, thermoplastic polycarbonates, polyesters, poly(ethylene terephthalate), polystyrene, poly(alpha methylstyrene), copoly(styrene-methyl methacrylate), copoly(styrene-acrylonitrile), polyvinylbutyral and polymers, i.e., homopolymers and copolymers, of diallylidene pentaerythritol, particularly copolymers with polyol (allyl carbonate) monomers, e.g., diethylene glycol bis(allyl carbonate), acrylate monomers, e.g., ethyl acrylate, butyl acrylate and mixtures thereof. Further examples of polymeric organic materials are disclosed in the U.S. Patent 5,753,146, column 8, line 62 to column 10, line 34.

Transparent copolymers and blends of transparent polymers are also suitable as substrates. Preferably, the substrate for the coating composition is an optically clear polymerized organic material prepared from a thermoplastic polycarbonate resin, such as the carbonate-linked resin derived from bisphenol A and phosgene, which is sold under the trademark, LEXAN; a polyester, such as the material sold under the trademark, MYLAR; a poly(methyl methacrylate), such as the material sold under the trademark, PLEXIGLAS; polymerizates of a polyol(allyl carbonate) monomer, especially diethylene glycol bis(allyl carbonate), which monomer is sold under the trademark CR-39, and polymerizates of copolymers of a polyol (allyl carbonate), e.g., diethylene glycol bis(allyl carbonate), with other copolymerizable monomeric materials, such as copolymers with vinyl acetate, e.g., copolymers of from 80-90 percent diethylene glycol bis(allyl carbonate) and 10-20 percent vinyl acetate, particularly 80-85 percent of the bis(allyl carbonate) and 15-20 percent vinyl acetate, and copolymers with a polyurethane having terminal diacrylate functionality, as described in U.S. Patents 4,360,653 and 4,994,208; and copolymers with aliphatic urethanes, the terminal portion of which contain allyl or acrylyl functional groups, as described in U.S. Patent 5,200,483; poly(vinyl acetate), polyvinylbutyral, polyurethane, polythiourethanes, polymers of members of the group consisting of diethylene glycol dimethacrylate monomers, diisopropenyl benzene monomers, ethoxylated bisphenol A dimethacrylate monomers, ethylene glycol bismethacrylate monomers, poly(ethylene glycol) bismethacrylate monomers, ethoxylated phenol bismethacrylate monomers and ethoxylated trimethylol propane triacrylate monomers; cellulose acetate, cellulose propionate, cellulose butyrate, cellulose acetate butyrate, polystyrene and copolymers of styrene with methyl methacrylate, vinyl acetate, acrylonitrile and mixtures thereof.

More particularly contemplated is use of the coating composition of the present invention with optically clear polymerizates, i.e., materials suitable for optical applications, such as for example lenses, i.e., plano and ophthalmic lenses, that are prepared from optical organic resin monomers. optically clear polymerizates may have a refractive index that may range from 1.48 to 2.00, e.g., from 1.495 to 1.75 or from 1.50 to 1.66.

The present invention is more particularly described in the following examples which are intended as illustrative only, since numerous modifications and variations therein will be apparent to those skilled in the art.

### Example 1

γ-Glycidoxypropyltrimethoxysilane, 122 grams, and tetramethoxysilane, 28 grams, were added to a suitable vessel and stirred. NALCO® 8676 colloidal alumina, 91.5 grams, was added to the vessel with stirring. NALCO® 8676 colloidal alumina is a white opalescent liquid, which is reported in NALCO Chemical Company's product literature to be a 10 weight percent suspension of alumina particles in water. The alumina particles are described as having a positive surface charge, an average particle size of approximately 2 nanometers, a pH of about 4.7 and a titratable chloride level of about 3.6 weight percent. Within ten minutes, the exotherm generated from the hydrolysis of the silanes caused an increase in the temperature of the reaction mixture from about 25°C to over 50°C. The mixture was stirred for an additional hour while cooling to.about 30°C. A 50/50 weight ratio of DOWANOL® PM and PMA solvents, 158.5 grams, was added to the mixture and stirred. BYK®-306 additive, which is reported to be a polyether modified dimethylpolysiloxane copolymer in solvent, 0.4 gram, was added and the resulting mixture was stirred for at least 30 minutes. The resulting coating solution was filtered through a nominal 0.45 micron capsule filter and stored at 4°C until use.

### Example 2

γ-Glycidoxypropyltrimethoxysilane, 240 grams, and tetramethoxysilane, 106.5 grams, were added to a vessel immersed within an ice bath and stirred. NALCO® 8676 colloidal alumina, 205 grams, was added to the vessel with stirring. Within ten minutes, the exotherm generated from the hydrolysis of the silanes caused an increase in the temperature of the reaction mixture from about 5°C to over 25°C. The mixture was stirred for an additional 3 hours while maintaining the temperature of the reaction mixture near 25°C. A 50/50 weight ratio of DOWANOL® PM and PMA solvents, 350 grams, was added to the mixture and stirred. BYK®-306 additive, 0.9 gram, was added and the resulting mixture was stirred for at least 30 minutes. The resulting coating solution was filtered through a nominal 0.45 micron capsule filter and stored at 4°C until use.

### Example 3

The procedure of Example 2 was followed except that the following were used: 208 grams of γ-glycidoxypropyltrimethoxysilane, 149 grams of tetramethoxysilane, 205 grams of NALCO® 8676 colloidal alumina, 339 grams of a 50/50 weight ratio of DOWANOL® PM and PMA solvents and 0.9 grams of BYK®-306 additive.

### Example 4

The procedure of Example 2 was followed except that the following were used: 160 grams of γ-glycidoxypropyltrimethoxysilane, 213 grams of tetramethoxysilane and 323 grams of a 50/50 weight ratio of DOWANOL® PM and PMA solvents.

### Example 5

The procedure of Example 1 was followed except that the following were used: 133 grams of a 50/50 weight ratio of DOWANOL® PM and PMA solvents and 117 grams of NALCO® 1056 alumina-coated silica sol. NALCO® 1056 alumina-coated silica sol was used in place of the NALCO® 8676 colloidal alumina. NALCO® 1056 alumina-coated silica sol is a blue opalescent liquid, which is reported in NALCO Chemical Company's product literature to be a 30 weight percent dispersion containing about 4 percent alumina and about 26 percent silicon dioxide in water. The alumina-coated silica particles are reported as having a positive surface charge, an average particle size of approximately 20 nm, a pH of about 3.7 and a titratable chloride level of about 1.15 weight percent.

### Comparative Example 1

The procedure of Example 1 was followed except that the tetramethoxysilane was replaced with 26 grams of methyltrimethoxysilane and the following amounts of the other materials were used: 122 grams of γ-glycidoxypropyltrimethoxysilane; 91.5 grams of NALCO® 8676 colloidal alumina; and 158.5 grams of a 50/50 weight ratio of DOWANOL® PM and PMA solvents.

### Example 6

### Part A

Uncoated lenses made of CR-39® diethylene glycol bis(allyl carbonate)monomer were cleaned with acetone; washed with soapy water; rinsed with deionized water; soaked in a 12.5 weight percent sodium hydroxide solution in an ultrasonic bath maintained at 50°C for 3 minutes; sequentially rinsed in two ultrasonic baths containing deionized water maintained at 50°C; rinsed with isopropyl alcohol; and dried in a convection oven maintained at 60°C.

### Part B

The coating solutions of the Examples and Comparative Example were warmed to room temperature (about 20-24°C) with stirring. Approximately 3 milliliters (mL) of each coating solution was applied to the surface of lenses prepared in Part A via spin coating at about 1100 rpm. The spinning was stopped after 10 seconds to produce coating thickness of between 2-3 microns. The coated lenses were initially held at 60°C for 20 minutes and then cured at 120°C for 3 hours.

### Part C

Abrasion resistance of the coated lenses prepared in Part B was determined using ASTM Test Method F735-81. The test samples were exposed to 300 cycles of oscillation in the ASTM Test Method using either sand or alundum as indicated. The Bayer Abrasion Resistance Index (BARI), listed in Table 1 for duplicate samples, was calculated by dividing the percent haze of an uncoated test sample made of a homopolymer prepared from CR-39® monomer by the percent haze of the coated test sample. The resulting number is an indication of how much more abrasion resistant the coated test sample is as compared to the uncoated test square. The haze and transmission results before and after abrasion testing were measured with a Hunter Lab Model DP25P Colorimeter.

Adhesion of the coating on the test lenses was measured using ASTM D-3359-93 Standard Test Method for Measuring Adhesion by Tape Test-Method B. Testing was performed prior to immersing the lenses in boiling deionized water and after 60 minutes of immersion in the boiling water. Immersion in boiling water simulated chemical attack. The adhesion test results revealed no loss of the coating before or after immersion in the boiling water for all of the Examples and Comparative Example 1.

**Table 1**

| **Example Number** | **BARI (sand)** | **BARI (alundum)** |
|---|---|---|
| 1 | 9.08 | ---- |
| 2 | ---- | 6.26 |
| 3 | ---- | 6.58 |
| 4 | ---- | 7.40 |
| 5 | 7.26 | ---- |
| CE1 | ---- | 4.76 |

The results of Table 1 show that the lenses coated with Comparative Example (CE) 1, which contains a methyltrimethoxysilane in place of a tetramethoxysilane, were less resistant to abrasion than the lenses coated with the compositions of Examples 1-7.

Although the present invention has been described with reference to the specific details of particular embodiments thereof, it is not intended that such details be regarded as limitations upon the scope of the invention except as and to the extent that they are included in the accompanying claims.

## Claims

1. A coating composition comprising:
(a) from 5 to 75 weight percent, based on the total weight of the coating composition, of silane monomers:
(i) glycidoxy((C₁-C₃)alkyl)) tri(C₁-C₄)alkoxy-silane; and
(ii) tetra(C₁-C₆)alkoxysilane).
the weight ratio of (i) to (ii) ranging from 0.5:1 to 100:1;
(b) a catalytic amount of aqueous acidic alumina sol, said sol having particulate alumina of an average particle size of not more than 200 nanometers;
(c) a solvating amount of organic solvent;
(d) a leveling amount of nonionic surfactant; and
(e) water in an amount sufficient to form hydrolysates of said silane monomers,
provided no curing catalyst is added.

2. The coating composition of claim 1 wherein the silane monomer(s) range from 10 to 60 weight percent of the composition and are glycidoxy((C₁-C₃)alkyl)) tri(C₁-C₂)alkoxysilane and tetra(C₁-C₄)alkoxysilane in a weight ratio ranging from 0.75:1 to 50:1.

3. The coating composition of claim 1 wherein the silane monomer(s) range from 20 to 50 weight percent of the composition and are γ-glycidoxypropyltrimethoxysilane and tetramethoxysilane in a weight ratio ranging from 1:1 to 5:1.

4. The coating composition of claim 1 wherein the average particle size of the alumina ranges from 1 to 100 nanometers and the amount of alumina in said coating composition ranges from 0.25 weight percent to 10 weight percent.

5. The coating composition of claim 4 wherein the average particle size of the alumina ranges from 2 to 30 nanometers and the amount of alumina in said coating composition ranges from 1 weight percent to 7 weight percent.

6. The coating composition of claim 1 wherein the solvating amount of organic solvent comprises up to 90 weight percent of the coating composition.

7. An article comprising in combination, a polymeric organic material and on at least one surface thereof a coating prepared by curing a coating composition according to any of claims 1-6.

8. The article of claim 7 wherein the polymeric organic material is selected from polyacrylates, polymethacrylates, poly(C₁-C₁₂) alkyl methacrylates, polyoxy(alkylene methacrylates), poly (alkoxylated phenol methacrylates), cellulose acetate, cellulose triacetate, cellulose acetate propionate, cellulose acetate butyrate, poly(vinyl acetate), poly(vinyl alcohol), poly(vinyl chloride), poly(vinylidene chloride), thermoplastic polycarbonates, polyesters, polyurethanes, polythiourethanes, poly(ethylene terephthalate), polystyrene, poly(alpha methylstyrene), copoly(styrene-methylmethacrylate), copoly(styrene-acrylonitrile), polyvinylbutyral and polymers of polyol(allyl carbonate) monomers, polyfunctional acrylate monomers, polyfunctional methacrylate monomers, diethylene glycol dimethacrylate monomers, diisopropenyl benzene monomers, alkoxylated polyhydric alcohol monomers, diallylidene pentaerythritol monomers or mixtures thereof.

9. The article of claim 8 wherein the polymeric organic material is a homopolymer or copolymer of monomer(s) selected from acrylates, methacrylates, methyl methacrylate. ethylene glycol bismethacrylate, ethoxylated bisphenol A dimethacrylate, vinyl acetate, vinylbutyral, urethane, thiourethane, diethylene glycol bis(allyl carbonate), diethylene glycol dimethacrylate, diisopropenyl benzene, ethoxylated trimethylol propane triacrylate or mixtures thereof.

10. The article of any of claims 7-9 wherein the article is an optical element.

11. The article of claim 10 wherein the optical element is a lens.

## Patentansprüche

1. Beschichtungszusammensetzung enthaltend:
(a) 5 bis 75 Gew.-%, bezogen auf das Gesamtgewicht der Beschichtungszusammensetzung, an Silanmonomeren:
(i) Glycidoxy((C₁-C₃)alkyl))tri(C₁-C₄)alkoxysilan und
(ii) Tetra(C₁-C₆)alkoxysilan,
wobei das Gewichtsverhältnis von (i) zu (ii) im Bereich von 0,5:1 bis 100:1 liegt,
(b) eine katalytische Menge eines wässrigen sauren Aluminiumoxidsols, wobei dieses Sol teilchenförmiges Aluminiumoxid mit einer mittleren Teilchengröße von nicht mehr als 200 nm aufweist,
(c) eine solvatisierende Menge eines organischen Lösungsmittels,
(d) eine Verlauf gewährleistende Menge eines nichtionischen oberflächenaktiven Mittels und
(e) Wasser in einer Menge, die ausreicht, um Hydrolysate dieser Silanmonomere zu bilden,
unter der Voraussetzung, dass kein Härtungskatalysator zugegeben wird.

2. Beschichtungszusammensetzung nach Anspruch 1, wobei die Silanmonomere in einer Menge von 10 bis 60 Gew.-% der Zusammensetzung vorhanden sind und Glycidoxy((C₁-C₃)alkyl))-tri(C₁-C₂)alkoxysilan und Tetra(C₁-C₄)alkoxysilan in einem Gewichtsverhältnis im Bereich von 0,75:1 bis 50:1 sind.

3. Beschichtungszusammensetzung nach Anspruch 1, wobei die Silanmonomere in einer Menge im Bereich von 20 bis 50 Gew.-% der Zusammensetzung vorhanden sind und γ-Glycidoxypropyltrimethoxysilan und Tetramethoxysilan in einem Gewichtsverhältnis im Bereich von 1:1 bis 5:1 sind.

4. Beschichtungszusammensetzung nach Anspruch 1, wobei die mittlere Teilchengröße des Aluminiumoxids von 1 bis 100 nm reicht und die Menge an Aluminiumoxid in dieser Beschichtungszusammensetzung von 0,25 Gew.-% bis 10 Gew.-% reicht.

5. Beschichtungszusammensetzung nach Anspruch 4, wobei die mittlere Teilchengröße des Aluminiumoxids von 2 bis 30 nm reicht und die Menge des Aluminiumoxids in dieser Beschichtungszusammensetzung von 1 Gew.-% bis 7 Gew.-% reicht.

6. Beschichtungszusammensetzung nach Anspruch 1, wobei die solvatisierende Menge des organischen Lösungsmittels bis zu 90 Gew.-% der Beschichtungszusammensetzung ausmacht.

7. Gegenstand enthaltend in Kombination ein polymeres organisches Material und auf wenigstens einer Oberfläche davon eine Beschichtung, die durch Härten einer Beschichtungszusammensetzung nach einem der Ansprüche 1 bis 6 hergestellt ist.

8. Gegenstand nach Anspruch 7, wobei das polymere organische Material ausgewählt ist aus Polyacrylaten, Polymethacrylaten, Poly(C₁-C₁₂)alkylmethacrylaten, Polyoxy(alkylenmethacrylaten), Poly(alkoxylierten Phenolmethacrylaten), Celluloseacetat, Cellulosetriacetat, Celluloseacetatpropionat, Celluloseacetatebutyrat, Poly(vinylacetat), Poly(vinylalkohol), Poly(vinylchlorid), Poly(vinylidenchlorid), thermoplastischen Polycarbonaten, Polyestern, Polyurethanen, Polythiourethanen, Poly(ethylenterephthalat), Polystyrol, Poly(α-methylstyrol), Copoly(styrol-methylmethacrylat), Copoly(styrol-acrylnitril), Polyvinylbutyral und Polymeren von Polyol(allylcarbonat)monomeren, polyfunktionellen Acrylatmonomeren, polyfunktionellen Methacrylatmonomeren, Diethylenglykoldimethacrylatmonomeren, Diisopropenylbenzolmonomeren, alkoxylierten mehrwertigen Alkoholmonomeren, Diallylidenpentaerythritolmonomeren oder Mischungen davon.

9. Gegenstand nach Anspruch 8, wobei das polymere organische Material ein Homopolymer oder Copolymer von Monomeren, ausgewählt aus Acrylaten, Methacrylaten, Methylmethacrylat, Ethylenglykolbismethacrylat, ethoxyliertem Bisphenol-A-dimethacrylat, Vinylacetat, Vinylbutyral, Urethan, Thiourethan, Diethylenglykolbis(allylcarbonat), Diethylenglykoldimethacrylat, Diisopropenylbenzol, ethoxyliertem Trimethylolpropantriacrylat oder Mischungen davon, ist.

10. Gegenstand nach einem der Ansprüche 7 bis 9, wobei der Gegenstand ein optisches Element ist.

11. Gegenstand nach Anspruch 10, wobei das optische Element eine Linse ist.

## Revendications

1. Composition de revêtement comprenant :
(a) de 5 à 75% en poids, par rapport au poids total de la composition de revêtement, de monomères de silane :
(i) glycidoxy[alkyl(C₁-C₃)]trialcoxy(C₁-C₄)silanes; et
(ii) tétraalcoxy(C₁-C₄)silanes,
le rapport en poids de (i) à (ii) étant de 0,5/1 à 100/1;
(b) une quantité catalytique de sol d'alumine acide aqueux, ledit sol contenant une alumine particulaire d'une taille de particule moyenne de pas plus de 200 nanomètres;
(c) une quantité solvatante de solvant organique;
(d) une quantité d'égalisation d'agent tensioactif non ionique; et
(e) de l'eau en une quantité suffisante pour former des hydrolysats desdits monomères de silane,
pour autant que pas de catalyseur de durcissement ne soit ajouté.

2. Composition de revêtement suivant la revendication 1, dans laquelle le(s) monomère(s) de silane constituent de 10 à 60% en poids de la composition et sont un glycidoxy[alkyl(C₁-C₃)]trialcoxy-(C₁-C₄)silane et un tétraalcoxy(C₁-C₄)silane dans un rapport en poids allant de 0,75/1 à 50/1.

3. Composition de revêtement suivant la revendication 1, dans laquelle le(s) monomère(s) de silane constituent de 20 à 50% en poids de la composition et sont du γ-glycidoxypropyltriméthoxysilane et du tétraméthoxysilane dans un rapport en poids allant de 1/1 à 5/1.

4. Composition de revêtement suivant la revendication 1, dans laquelle la taille de particule moyenne de l'alumine est de 1 à 100 nanomètres et la quantité d'alumine dans ladite composition de revêtement est de 0,25% en poids à 10% en poids.

5. Composition de revêtement suivant la revendication 4, dans laquelle la taille de particule moyenne de l'alumine est de 2 à 30 nanomètres et la quantité d'alumine dans ladite composition de revêtement est de 1% en poids à 7% en poids.

6. Composition de revêtement suivant la revendication 1, dans laquelle la quantité solvatante de solvant organique constitue jusqu'à 90% en poids de la composition de revêtement.

7. Article comprenant en combinaison, une matière organique polymérique et au moins sur une de ses surfaces un revêtement préparé par durcissement d'une composition de revêtement suivant l'une quelconque des revendications 1 à 6.

8. Article suivant la revendication 7, dans lequel la matière organique polymérique est choisie parmi les polyacrylates, les poly-méthacrylates, les polyalkyl(C₁-C₁₂)méthacrylates, les polyoxy(méth-acrylates d'alkylène), les poly(méthacrylates de phénol alcoxylé), l'acétate de cellulose, le triacétate de cellulose, l'acétopropionate de cellulose, l'acétobutyrate de cellulose, le poly(acétate de vinyle), le poly(alcool vinylique), le poly(chlorure de vinyle), le poly(chlorure de vinylidène), les polycarbonates thermoplastiques, les polyesters, les polyuréthannes, les polythiouréthannes, le poly(éthylène téréphtalate), le polystyrène, le poly(alpha-méthylstyrène), les copoly(styrène-méth-acrylate de méthyle), les copoly(styrène-acrylonitrile), le polyvinylbutyral et les polymères de monomères de polyol(allyl carbonate), de monomères d'acrylate polyfonctionnels, de monomères de méthacrylate polyfonctionnels, de monomères de diméthacrylate de diéthylène glycol, de monomères de diisopropényl benzène, de monomères d'alcools polyatomiques alcoxylés, de monomères de diallylidène pentaérythritol et leurs mélanges.

9. Article suivant la revendication 8, dans lequel la matière organique polymérique est un homopolymère ou copolymère de monomère(s) choisis parmi les acrylates, les méthacrylates, le méthacrylate de méthyle, l'éthylène glycol bisméthacrylate, le diméthacrylate de bisphénol A éthoxylé, l'acétate de vinyle, le vinylbutyral, les uréthannes, les thiouréthannes, le diéthylène glycol bis(allyl carbonate), le diméthacrylate de diéthylène glycol, le diisopropényl benzène, le triacrylate de triméthylol propane éthoxylé et leurs mélanges.

10. Article suivant l'une quelconque des revendications 7 à 9, dans lequel l'article est un élément optique.

11. Article suivant la revendication 10, dans lequel l'élément optique est une lentille.
